# EUROPEAN PATENT APPLICATION

(11) **EP 1 974 604 A2**
(43) Date of publication of application: **01.10.2008**
(21) Application number: 08005450.5
(22) Date of filing: 25.03.2008
(51) Int. Cl.: A01K 15/02

(54) **Interactive pet amusement device and method for use**

(30) Priority: 22.03.2007 US 896334 P
(71) Applicant: TOPET (H.K.) CO., LIMITED, Hong Kong (HK); Topet Usa, Inc., Morrison CO 80465 (US)
(72) Inventor: Fung, Kin Man; Block 5 4/F Flat B, Tsueng Kwan O. (HK)
(74) Representative: Hirsch & Associés

(57) **Abstract**

A device for interactive use with a pet animal and a method for interacting with a pet animal. The device can attach to a person's foot and includes a support arm that extends from the person's foot. A toy (306) is attached to a distal end of the support arm (304) such as by using a strand (310) to affix the toy to the support arm. In this manner, the person can manipulate the toy using the person's foot to amuse the pet animal without requiring the person to utilize their hands or arms to provide the toy motion. The device can include a base member (302) that fastens to the person's foot, where the support arm extends from the base member. The device can also include a second toy that can attach to the base member when the support arm is removed from the base member.

## Description

### BACKGROUND OF THE INVENTION

### 1. Field of the Invention

This invention relates to the field of pet toys that are adapted to be used interactively between a pet animal and a person.

### 2. Description of Related Art

There are a variety of pet amusement and exercise devices that are adapted to exercise and entertain household domestic pet animals, such as a cat, dog, rabbit, ferret or the like. Some of these devices entertain the animal by simulating the movement of small prey such as a mouse, allowing the animal to utilize its natural hunting instincts.

U.S. Patent No. 5,829,391 by Krietzman discloses a pet amusement and exercise device which is mounted under a door. The device includes a U-shaped mounting bracket adapted to fit under the bottom edge of a door, a flexible wand extending from the mounting bracket, and a target object attached to an end of the flexible wand. The device does not enable interactive play between a pet and a person.

U.S. Patent No. 5,148,769 by Zelinger discloses a pet amusement device that includes a suction cup that can be removably mounted onto a surface, a spring-like wire mounted onto the suction cup base and a toy mounted on the end of the wire that can be batted by the animal. This device also does not enable interactive play between a pet and a person.

U.S. Patent No. 6,378,464 and U.S. Patent No. 6,481,381, both by Ritchey, disclose a pet amusement device that includes a toy disposed at the end of a wand so that the device can be used in a fishing pole manner to entertain and exercise a pet animal. Similar devices are disclosed U.S. Patent No. 4,499,855 by Galkiewicz, U.S. Patent No. 5,467,740 by Redwine, U.S. Patent No. 5,743,215 by Zeff and U.S. Patent No. 6,314,913 by Lettau et al.

While some of these devices enable direct interaction between a pet and a person, they require the person to utilize one or both hands to manipulate the toy and interact with the pet. This can distract the human from simultaneously partaking in other activities that require the use of their hands such as reading. Further, the elongate poles used by same prior art devices must be held up in the air and moved about by the person, which can quickly fatigue the person's arms.

### SUMMARY OF THE INVENTION

Accordingly, it is an object of the present invention to provide an amusement device and method for amusing a pet animal that overcome one or more of the disadvantages of the prior art devices. According to one aspect, a person can interact with the pet animal by moving a toy in the air or along the ground without requiring the person to utilize their hands and arms to provide the toy motion.

In one embodiment, a device is provided that is adapted for interactive use with a pet animal. The device includes a support arm having a distal end. A toy is affixed to the distal end of the support arm. The support arm can be attached to a person's foot such that the toy can be moved in a variety of directions to amuse and exercise the pet animal.

In one aspect, the support arm can be attached to a person's foot using a base member that is adapted to fasten to the front of a person's foot. The support arm extends from the base member and the person can easily manipulate the toy to amuse a pet animal. In one aspect, the base member can include a substantially concave inner surface that is adapted to at least partially conform to the front of a person's foot. According to another aspect, the device includes an elastic band or a strap, such as a nylon strap, that is adapted to wrap around a person's heel to secure the device to the person's foot. The strap can be tightened and secured to the person's foot using a buckle or hook and loop fasteners. For example, the elastic band or strap can be coupled to the base member to urge a base member against the front of a person's foot.

When the device includes a base member, the support arm can be permanently attached to the base member, or alternatively can be removably attached to the base member. According to one aspect, when the support arm is removably attached to the base member, the support arm can be removed and reattached to the base member without the use of tools. According to another aspect, the device can further include at least a second toy that can be removably attached to the base member, such as by removably attaching to the base member in place of the first toy. The second toy can include a laser pointer that can be manipulated to amuse a pet animal.

The support arm can be substantially straight or it can curve outwardly when the device is attached to a person's foot and the distal end of the support arm can include an aperture for attaching the toy to the support arm. For example, the toy can attach to the distal end of the support arm using a strand, such as a strand of common string or fishing line. To enable the toy to be supported above ground level without requiring the person to maintain their foot elevated in the air, the strand to which the toy is attached can have a length that is not greater than the length of the support arm.

In another embodiment, a device is provided that is adapted for interactive use with a pet animal where the device includes a base member that is adapted to removably attach to the front of a person's foot. A support arm extends outwardly and upwardly from the base member when the base member is attached to the person's foot. A first toy is attached to a distal end of the support arm such that the person can move his or her foot to manipulate the toy and amuse the pet animal.

In one aspect, the device includes an elastic band that is adapted to wrap around the person's heel and urge the base member against the front of the person's foot. According to another aspect, the device includes a strap that is adapted to wrap around a person's heel and urge the base member against the front of the person's foot. According to another aspect, the toy is affixed to the support arm by a strand, where the strand has a length between the distal end of the support arm and the first toy that is not greater than the length of the support arm.

According to another aspect, the support arm is removably attached to the base member. In this regard, the device can include at least a second toy, where the second toy can be removably attached to the base member in place of the first toy. According to one aspect, the second toy is a laser pointer.

The present invention also provides a method for interactively amusing a pet animal. The method can include providing a support arm having a distal end, attaching a toy to the distal end of the support arm, attaching the support arm to a person's foot such that the support arm extends upwardly therefrom, and moving the person's foot to cause movement of the toy for the amusement of a pet animal. According to one aspect, the step of attaching the support arm to the front of a person's foot includes attaching a base member to the person's foot where the support arm extends from the base member. According to another aspect, the method further includes the steps of removing the support arm from the front of the person's foot and attaching a second toy to the front of the person's foot for further amusement of the pet animal.

### DESCRIPTION OF THE DRAWINGS

**Fig. 1** illustrates a perspective view of an interactive pet amusement device.
**Figs. 2(a) to 2(c)** illustrate different perspective views of an interactive pet amusement device.
**Fig. 3** illustrates a method for interactively amusing a pet animal.
**Figs. 4(a) and 4(b)** illustrate an interactive pet amusement device having multiple detachable toys.

### DESCRIPTION OF THE INVENTION

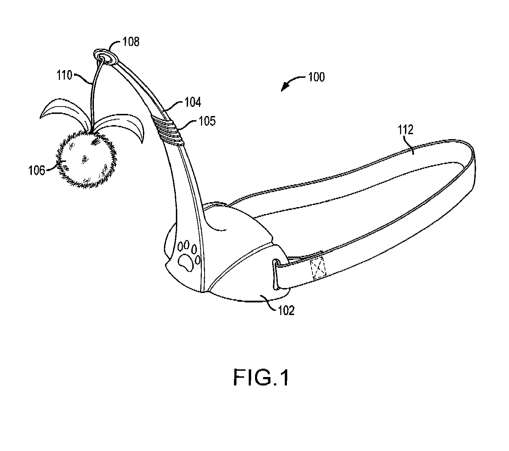

**Fig. 1** illustrates a device that is adapted for interactive use with a pet animal. The device **100** includes a support arm **104** that is attached to and extends upwardly from a base member **102.** A toy **106** is affixed to a distal end of the support arm **104** by a strand **110.** An elastic band **112** is also coupled to the base member **102** and forms a loop that can secure the base member **102** onto the foot of a person by wrapping the elastic band **112** around a person's heel.

Accordingly, the support arm **104** can attach to a person's foot through the base member **102** which can be urged against the front of a person's foot by the elastic band **112.** The base member **102** advantageously provides a stable attachment of a support arm to the person's foot. Alternatively, a support arm could be attached to a person's foot by other means, such as by simply by attaching the support arm to an elastic band or strap that wraps around the metatarsus region of a person's foot to secure the support arm to the person's foot.

In the embodiment illustrated in **Fig. 1****,** the support arm **104** is attached to a person's foot using the base member **102** and the elastic band **112.** The base member **102** is adapted to be removably fastened to a foot, such as by securely fastening to the front of a shoe or sneaker on a person's foot. As illustrated in **Fig. 1****,** the base member **102** is adapted to at least partially conform around the front of a person's foot. A base member could also fasten to a user's foot in a different position, such as a base member that partially or wholly extends around the metatarsus region between the toe and heel of a person's foot. A base member can also comprise an entire shoe that can be worn on a person's foot where a support arm is attached to and extends from the shoe.

A base member such as base member **102** that fastens to the front of a person's foot is preferred, as that enables the support arm **104** to be disposed over the person's toes. This permits a person to more easily move the base member **102** by raising and lowering the front of their foot, and hence more easily move the toy **106** in a manner that is amusing for a pet animal and puts minimal strain on the user. The base member **102** can also be easily removed from and re-fastened to the person's foot.

The base member **102** can be configured to fasten to and remain on the person's foot during use by simply pressing the base member **102** onto the front of the person's foot so that the base member frictionally engages the front of the foot, such as by engaging a shoe worn by the person. The base member **102** can have a substantially concave inner surface that presses up against the front of the person's foot. For example, the base member could include a u-shaped member of a resilient material that fastens to the front of a person's foot.

The device can also include an elastic band, a strap or a similar means for urging the base member **102** against the person's foot. As illustrated in **Fig. 1****,** the device includes an elastic band **112** that is coupled to the base member **102** and is adapted to wrap around the heel of a person's foot. In addition to an elastic band (e.g., a rubber band), a strap such as a nylon strap, with an attachment mechanism such as a buckle or a hook-and-loop fastener, can be used to secure the base member **102** to a person's foot.

Thus, the toy support arm **104** is preferably attached to a person's foot through a base member **102.** The toy support arm **104** can be permanently attached to the base member **102,** such as where the support arm and base member are integrally formed together as illustrated in **Fig. 1****,** or can be removably attached to the base member **102.** A removable support arm can simplify and facilitate packaging and shipping of the device **100,** as well as storage of the device **100** when not in use. If the support arm **104** is removably attached, it is preferred that the support arm **104** can be removed and re-attached to the base member **102** without the use of tools.

The support arm **104** extends upwardly from the base member **102.** The support arm **104** can also extend outwardly from the base member **102** when the device **100** is fastened onto a person's foot. A support arm that is adapted to extend both upwardly and outwardly advantageously maintains the toy **106** in spaced-apart relation with respect to the base member **102** so that the person's foot is less likely to interfere with the pet animal during use. The support arm can be substantially straight or, as is illustrated **Fig. 1****,** can be curved outwardly from the front of the base member **102.** Further, the support arm **104** can be substantially rigid, or can be resiliently flexible such that the pet animal can pull the arm slightly downward when tugging at the toy **106.** To provide flexibility, the support arm **104** can include a mid-portion **105** that is adapted to increase the flexibility of the support arm, such as by having a reduced cross-section or by being fabricated from a material having greater flexibility than the remainder of the support arm. For example, the mid-portion **105** can include notches in the support arm such that the support arm has a reduced cross-section in the mid-portion **105.**

The support arm **104** preferably has a length that is conducive to use with a pet animal such as a cat, and in one embodiment has a length of at least about 5 centimeters and not greater than about 30 centimeters, such as at least about 10 centimeters and not greater than about 20 centimeters. Since the device is used in close proximity to the ground, the support arm can advantageously have a length that is substantially less than the length of fishing rod type pet amusement devices that are operated by hand.

A toy **106** that is attractive for the pet animal is affixed to the support arm **104,** preferably to a distal end of the support arm **104.** Examples include soft plush style toys that give the appearance of small prey. The toy **106** can be affixed, for example, using a strand **110** that attaches to an aperture **108** at the distal end of the support arm **102,** with the toy being attached to the opposite end of the strand **110.** Preferably, the toy **106** is removably attached to the support arm. A removable toy enables a user to easily place different toys onto the end of the support arm **104,** such as when a toy wears out or the pet animal becomes bored with a particular toy. The strand **110** can be, for example, common string, fishing line, or the like. Alternatively, a toy can be attached directly to the support arm **104,** without the use of a separate strand.

When the toy **106** is attached to the support arm **104** using a strand **110,** the strand **110** preferably has a length that is not greater than the length of the support arm **104.** That is, the length of the strand **110** between the distal end of the support arm and the pet toy **106** is no longer than the length of the support arm. In this manner, the toy **106** can be easily suspended above the ground by the user without requiring the user to maintain their foot in an elevated position.

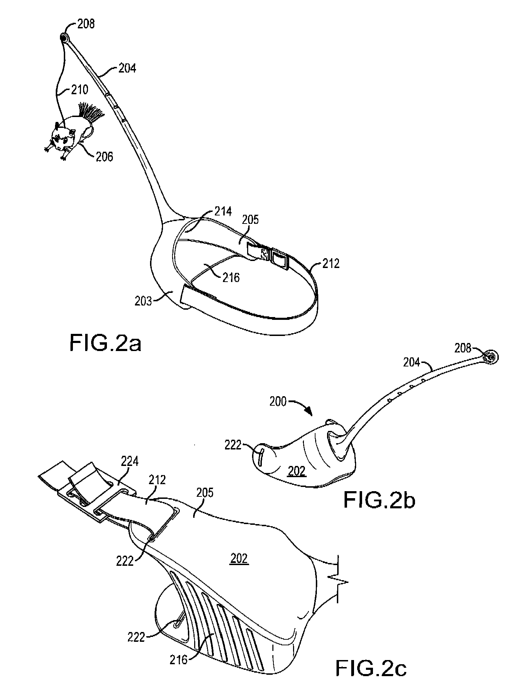

**Fig. 2(a)** to **2(c)** illustrate different perspective views of an interactive pet amusement device **200.** The device **200** includes a toy support arm **204** that can be attached to a person's foot, and a toy **206** affixed to a distal end of the support arm **204.** In the embodiment illustrated in **Figs. 2(a)** to **2(c)**, the support arm **204** is attached to a person's foot using base member **202,** which is adapted to fasten to the front of a person's foot. In this regard, the base member **202** includes a substantially concave inner surface **214** that is adapted to at least partially conform to the front of a person's foot. The base member **202** also includes side portions **203** and **205** that extend at least partially along the sides of the person's foot. The base member **202** can also include a bottom wall **216** to help secure the base member **202** to a person's foot. The bottom surface of the bottom wall **216** can be provided with grooves or projections adapted to provide traction on a floor when a user walks with the device **200** attached to their foot.

The device **200** also includes a strap **212** that is coupled to the side portions **203** and **205** of the base member to help secure the base member **202** to a person's foot. In this regard, the base member **202** can include slits **222** adapted to receive and secure the strap **212** to the base member **202.** As illustrated in **Fig. 2****,** the strap **212** is secured to a user's foot using a clip **224.**

The support arm **204** extends upwardly and outwardly from the base member **202** when the base member is attached to a person's foot. A toy **206** is attached to a distal end of the support arm **204** by a strand **210** tied or otherwise fastened to an aperture **208** in the support arm.

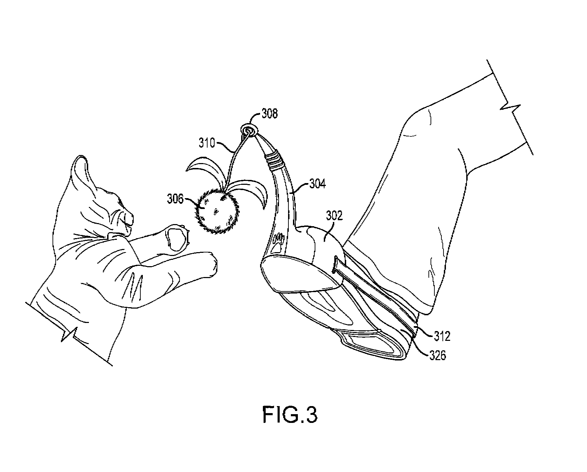

**Fig. 3** illustrates a method for amusing a pet animal using an interactive pet amusement device. A support arm **304** is provided and is attached to the front of a user's foot **326.** A toy **306** is affixed to a distal end of the support arm **304** through a strand **310** that is secured to a distal end of the support arm through an aperture **308** located at the distal end. The support arm **304** is attached to a base member **302** and the base member is fastened to the user's foot using a band **312.** The support arm **304** thereby extends upwardly from the user's foot **326.** A user can advantageously cause movement of the toy **306** to amuse and exercise the pet animal by simply moving the front end of their foot in a multitude of directions.

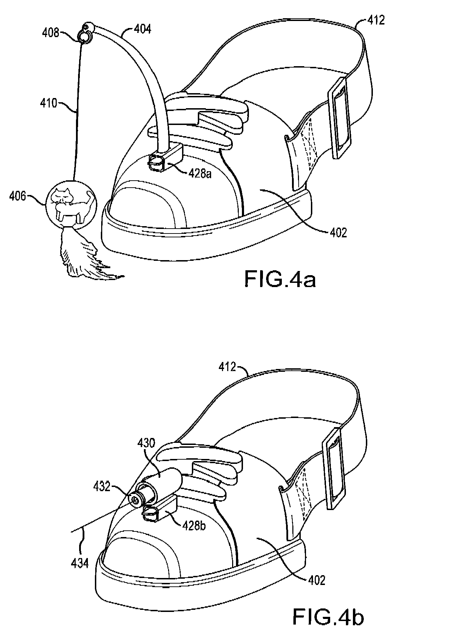

As is noted above, the toy support arm can be removably attached to a base member, and the support arm can preferably be removed and re-attached to the base member without the use of tools. **Fig. 4** illustrates an interactive pet amusement device where the support arm is detachable from the base member and is interchangeable with a second toy, such as a laser pointer.

**Fig. 4(a)** illustrates an interactive pet amusement device which includes a base member **402** and a strap **412** for securing the base member to a user's foot. A support arm **404** includes an aperture **408** to which a strand **410** is attached. A toy **406** is affixed to the opposite end of the strand **410,** as is noted above with respect to **Figs. 1-2.**

A fastener **428(a)** is disposed at a proximal end of the support arm **404** opposite the aperture **408** for removably attaching the support arm **404** to the base member **402,** which includes a mating fastener to receive and secure the arm fastener **428(a).** Through use of the fastener **428(a),** the support arm **404** can be removed and re-attached to the base member **402,** preferably without the use of tools.

In one embodiment, a second toy, such as a toy that is different than the toy **406** can also be provided, including a toy that does not require the use of the support arm **404.** In the embodiment illustrated in **Fig. 4(b)****,** the second toy includes a laser pointer **432** that is supported by a holder **430.** The holder **430** is mounted to the base member **402** using a fastener **428(b)** that is substantially identical to the fastener **428(a)** that mounts the support arm **404** to the base member **402.** In this manner, the user can select the toy **406** or a laser pointer **432** for amusing the pet animal. In the embodiment illustrated in **Fig. 4(b)****,** the user can move his or her foot in a manner to cause the bright pattern of light **434** formed by the laser pointer **432** to amuse the pet animal.

Thus, the interactive pet amusement device can include a base member and two or more pet toys that can be interchangeably mounted onto the base member for the continued stimulation and exercise of a pet animal.

The device and method of the present invention advantageously enable a user to interactively play with a pet animal while simultaneously maintaining the ability to perform other tasks that require the use of hands, such as reading. Further, the user is more likely to be able to play with the pet animal for an extended period of time without becoming tired. The device can advantageously be used, for example, when the user is in a sitting position.

While various embodiments of the present invention have been described in detail, it is apparent that modifications and adaptations of those embodiments will occur to those skilled in the art. However, is to be expressly understood that such modifications and adaptations are within the spirit and scope of the present invention.

## Claims

1. A device that is adapted for interactive use with a pet animal, the device comprising:
a support arm having a distal end;
a first toy affixed to said distal end of said support arm; and
means for attaching said support arm to a person's foot.

2. A device as recited in Claim 1, wherein said attaching means comprises a base member that is adapted to fasten to the front of a person's foot, wherein said support arm extends from said base member.

3. A device as recited in Claim 1 or 2, wherein said base member comprises a substantially concave inner surface that is adapted to at least partially conform to the front of a person's foot.

4. A device as recited in one of Claims 1 to 3, wherein said attaching means comprises an elastic band that is adapted to wrap around a person's heel.

5. A device as recited in one of Claims 1 to 4, wherein said attaching means further comprises an elastic band coupled to said base member wherein said elastic band is adapted to wrap around a person's heel and urge said base member against the front of a person's foot.

6. A device as recited in one of Claims 1 to 5, wherein said attaching means further comprises a strap that is adapted to wrap around a person's heel.

7. A device as recited in one of Claims 1 to 6, wherein said attaching means further comprises a strap coupled to said base member wherein said strap is adapted to wrap around a person's heel and urge said base member against the front of a person's foot.

8. A device as recited in one of Claims 1 to 7, wherein said support arm is permanently attached to said base member.

9. A device as recited in one of Claims 1 to 8, wherein said support arm is removably attached to said base member.

10. A device as recited in one of Claims 1 to 9, wherein said support arm is adapted to be removed from and attached to said base member without the use of tools.

11. A device as recited in one of Claims 1 to 10, wherein said device further comprises at least a second toy that can be removably attached to said base member.

12. A device as recited in one of Claims 1 to 11, wherein said second toy comprises a laser pointer.

13. A device as recited in one of Claims 1 to 12, wherein said first toy is affixed to said distal end of said support arm by a strand.

14. A device as recited in one of Claim 1 to 13, wherein said strand has a length that is not greater than the length of said support arm.

15. A method for interactively amusing a pet animal, comprising the steps of:
attaching a device according to any of the foregoing claims to the front of a person's foot, wherein the support arm extends generally upwardly from the person's foot; and
moving the person's foot to cause movement of said toy for the amusement of a pet animal in the presence of the device.
